# EUROPEAN PATENT APPLICATION

(11) **EP 2 493 120 A1**
(43) Date of publication of application: **29.08.2012**
(21) Application number: 11250209.1
(22) Date of filing: 23.02.2011
(51) Int. Cl.: H04L 12/26

(54) **Connectivity monitoring in a communications system**

(71) Applicant: British Telecommunications Public Limited Company, London EC1A 7AJ (GB)
(72) Inventor: The designation of the inventor has not yet been filed
(74) Representative: Brinck, Coreena Fiona Anne

(57) **Abstract**

An addressing scheme is proposed to enable the connectivity status of a traffic flow in a communications system comprising a plurality of layer networks to be monitored. Misconnectivity is determined by monitoring the traffic flow at a network location in a first layer network such as the sink point of an edge-to edge traffic flow in the first layer network. A unique source address for a received connectivity indicating traffic unit in said monitored flow is determined and if said source address is associated with misconnectivity of said traffic flow, it is determined if said source address comprises a topology unique access location identifier having a format which is the same as the format of a topology unique access location identifier for a source address in said first network. Where the formats are the same, the data structure of the source address for said monitored traffic flow is analysed in more detail to determine from the data structure subfields if the source address of said monitored traffic flow is associated with a topology unique access location identifier for a node located in a different layer network.

## Description

The invention relates to a method for detecting misconnectivity in a communications related aspects.

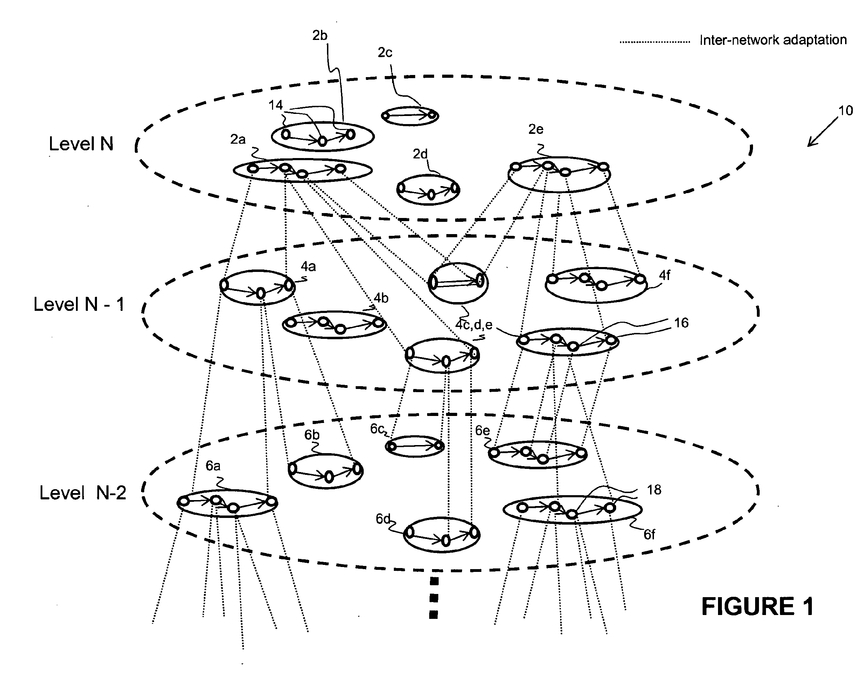

Figure 1 of the accompanying drawings is schematically drawn to show the complexity of the network infrastructure in a typical communications system 10 and to illustrate the potential complexity of the paths taken by various hypothetical traffic flows. Figure 1 shows an exemplary communications system 10 comprising a plurality of networks at various relative hierarchical levels N, N-1, N-2. Only 3 levels are shown for clarity of illustration and in practice there can be more levels (above and below) in the hierarchy. The hierarchy comprises multiple layer networks only in that they are shown to be decoupled and disjoint and at the same time they are all part of a global layer network (where there is no connectivity between them). Each network level N, N-1, N-2 comprises a plurality of layer networks. The layer networks are arranged in a level hierarchy forming client/server relationships between layer networks, where a client/server relationship refers to the transparent transport of a client (i.e., higher) layer link connection by a server (i.e., lower) layer network trail.

As shown in Figure 1, level N comprises layer networks 2a,b,c,d,e, level N-1 comprises layer networks 4a,b,c,d,e,f, and level N-2 comprise layer networks 6a,b,c,d,e,f. Those of ordinary skill in the art will be aware that a layer network can change its level relative to another layer network depending on the type of functional relationship it has with the respective other network, and that the relationships shown in Figure 1 are exemplary only. As shown in Figure 1, each network 2 at level N comprises a plurality of nodes 14, each layer network 4 at level N-1 comprises a plurality of nodes 16, and each network 6 at level N-2 comprises a plurality of nodes 18.

Figure 1 shows schematically for an exemplary communications path in each of networks 2a and 2e some of the resulting complexity of the traffic flow in the lower layer networks. Figure 1 illustrates the general architectural principle that each link-connection between nodes in a (client) layer network at level M is supported by an edge-to-edge communications path in a lower (server) layer network at level M-1. This client/server relationship recurses until the level represents a physical media infrastructure network that supports an electromagnetic wave at the bottom of the hierarchical stack of nested layer networks. Different network operators may control the operation of one or more layer networks. A network operator is only capable of receiving reports of misconnectivity defects from nodes which are located within the management domain of that network operator.

As shown in Figure 1, a traffic flow in each link connection of the level N network 2a also involves using an edge-to-edge communications path in level N-1 networks 4a,c,d. However, the traffic flow in each link connection of the level N-1 network 4a uses an edge-to-edge communications path in level N-2 networks 6a,b, and each link connection in the level N-1 network 4c uses an edge-to-edge communications path in level N-2 networks 6c,d. Similarly, the edge-to-edge communication shown in level N network 2e shown in Figure 1, relies on at least three server layer networks 4c,e,f in level N-1 and, for example, the edge-to-edge communication shown in layer network 4e uses server layer networks 6e, and 6f in level N-2.

As the traffic flow in the highest client network level traverses each underlying network level, a suitable inter-network adaptation function is implemented to encapsulate the traffic units from each client network within the payload of the traffic units of the server or transport network below.

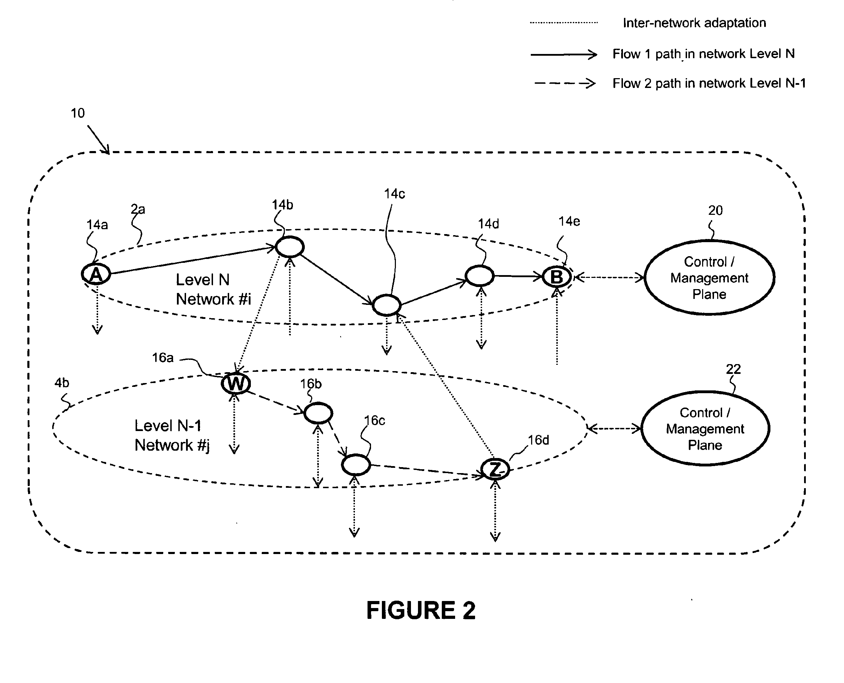

Figure 2 shows a much simplified communications system 10 comprising only two levels N, N-1 each comprising just one layer network 2a and 4b, referred to as networks #i and #j respectively herein.

A client/server relationship exists between the two networks 2a (client) and 4b (server), as network #i in level N uses the transport functionality provided by network #j in level N-1 for a link connection traffic flow between node 14b and node 14c in network #i. For clarity, not all inter-network adaptation functions have been shown that support the other link connections of the total communications path in network #i between nodes 14a and 14e. In practice these other link connections would be supported by different (to network #j) server level N-1 networks.

Source node 14a in network #i has a source address (SA) which is represented by a Topology Unique Access Location IDentifier (TUALID) "A", and destination node 14e in network #i which has the TUALID destination address (DA) "B". To monitor the status of the communication between nodes 14a and 14e, node 14a generates connectivity indicating traffic units which are monitored at the communication end-point to determine the connectivity status of the traffic flow. Examples of connectivity indicating traffic units include Operations, Administration, and Maintenance (OAM) traffic units such as Connection Verification (CV) packets (e.g. in ATM, MPLS, or Ethernet) or Bidirectional Forwarding Detection (BFD) packets (e.g. in Internet Protocol (IP) or Multi-Protocol Label Switching (MPLS) networks). The format of all TUALIDs and the type of OAM connectivity indicating traffic units used by a layer network are determined by the relevant communications protocol and/or network mode of communication used in each layer network, for example, in an IP network, a TUALID would usually be given by an IPv4 or IPv6 address.

The link connection traffic flow between nodes 14b and 14c in network #i is supported by an edge-to-edge server traffic flow (flow 2) between nodes 16a and 16d in network #j. As shown in Figure 2, this second traffic flow flows along a path between source node 16a (TUALID SA = "W") and destination node 16d (TUALID DA = "Z") via intermediate nodes 16b, 16c. Both the data plane (DP) traffic units and any connectivity checking OAM messages from the first traffic flow in network #i, are encapsulated within the DP traffic units of the second traffic flow at node 16a. Node 16a also generates its own connectivity checking OAM messages which follow the same path as the DP traffic units in network #j to enable monitoring of the second traffic flow (flow 2) in network #j at the termination point of the communication in this layer network at node 16d as shown in Figure 2.

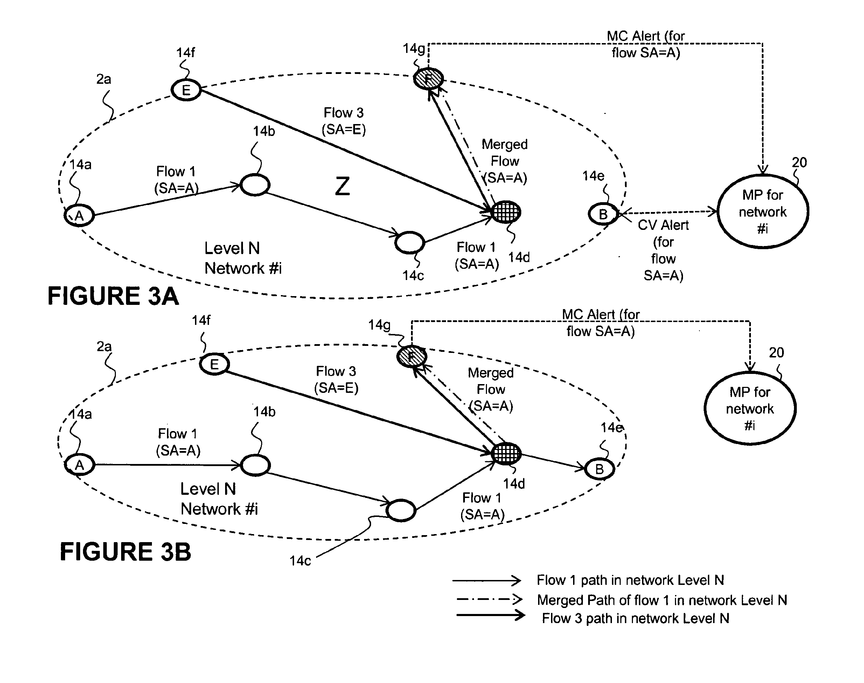

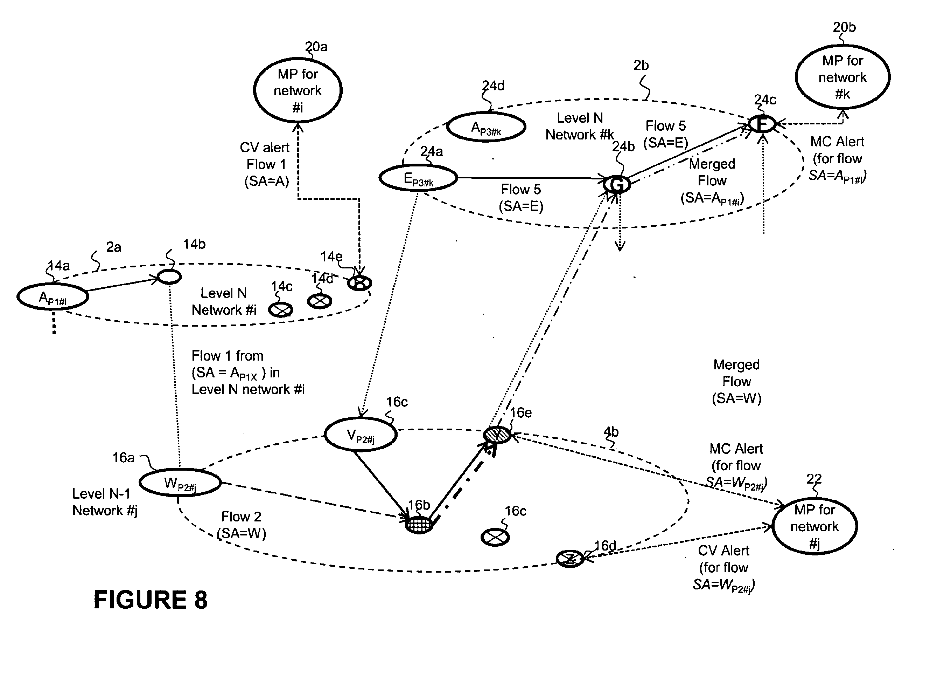

Misconnectivity occurs when a node directs a traffic flow so that one or more DP traffic units (including any OAM messages) are lost or stray from the intended path provisioned to support an edge-to-edge communication between two network location points (i.e., between two edge nodes). The specific types of misconnectivity that can occur vary with the network mode/technology and, in the case of the connection-oriented packet-switching mode, whether any short-cuts have been taken on the labelling of traffic units. Various standard documents review the various details of the types of misconnectivity that are possible for each network mode/technology. The OAM standards from the International Telecommunications Union (ITU) and the Internet Engineering Task Force (IETF) standards fora describe misconnectivity for various specific modes/technologies, including, for example, , e.g. I.610 for ATM OAM, Y.1731 for Ethernet OAM, RFC5880 (BFD) for IP based networking OAM, etc. To illustrate two types of misconnectivity defect known in the art, two examples of intra-layer mismerging misconnectivity are shown in Figures 3A and 3B. Inter-layer misconnectivity with another traffic flow in a different layer network is shown in Figure 8B, and is described in more detail herein below.

Two examples of potential misconnectivity of the traffic flow 1 shown in Figure 2 of the accompanying drawings will now be described with reference to Figures 3A and 3B of the accompanying drawings.

In Figure 2, traffic flow 1 follows the path from node 14a to 14e in level N network #i. Figure 3A which retains the numbering scheme of Figure 2 shows an exemplary intra-layer misconnectivity scenario for the traffic flow shown in Figure 2, in which node 14d undergoes a misconnectivity event in which traffic units from flow 1 are misdirected and mismerged by node 14d into a different flow 3 (SA = E) in this layer network #i from source node 14f towards node 14g.

At the termination point of the flow (node 14g), the connectivity status of the communication between nodes 14f and 14g is monitored by determining the source address of the connectivity checking OAM messages which arrive at node 14g. Traffic flow 3 has connectivity checking OAM messages that contain the source address SA = E and node 14g is configured to expect to see these arriving at a specified rate. Accordingly, node 14g assumes that the connection status for traffic flow 3 is acceptable if the conditions for it to receive connectivity monitoring traffic units with the SA = E are met. However, node 14g will also be receiving traffic units from flow 1, which have the source address of node 14a (SA =A), and when node 14g determines that some of the connectivity checking OAM messages it is receiving have an unexpected SA it determines that a misconnectivity event involving flow 1 and flow 3 has occurred.

Figure 3A also shows node 14e, the end-point of traffic flow 1, determining a second misconnectivity event has occurred which comprises the 'break' in traffic flow 1. In Figure 3A, node 14e will no longer be receiving connectivity checking OAM messages having the source address SA = A for flow 1 which triggers node 14e to generates a misconnectivity alert for flow 1. If network #i uses CV OAM packets to monitor the connection, node 14e generates a CV alert for flow 1 (SA = A) which is sent to the management plane 20 whenever one or more conditions for the OAM CV packets of flow 1 conform with predetermined defect requirements are met. In the case shown in Figure 3A this would be a simple break defect.

Figure 3B retains the numbering scheme of the previous figures and shows another type of misconnectivity in which node 14d duplicates the traffic units for flow 1 and mismerges these with the traffic units of flow 3 which is sent towards node 14g. As the original traffic flow 1 is otherwise unaffected it arrives as expected at 14e and thus shows no defects at this node. In this scenario, if all duplicated traffic units are forwarded to node 14g, the misconnectivity is only determinable by node 14g (with identical behaviours as shown for the previous case in Figure 3A) as node 14e will still receive connectivity checking OAM messages from node 14a which comply with the correct connectivity requirements for flow 1 and so node 14e does not raise any connectivity alert.

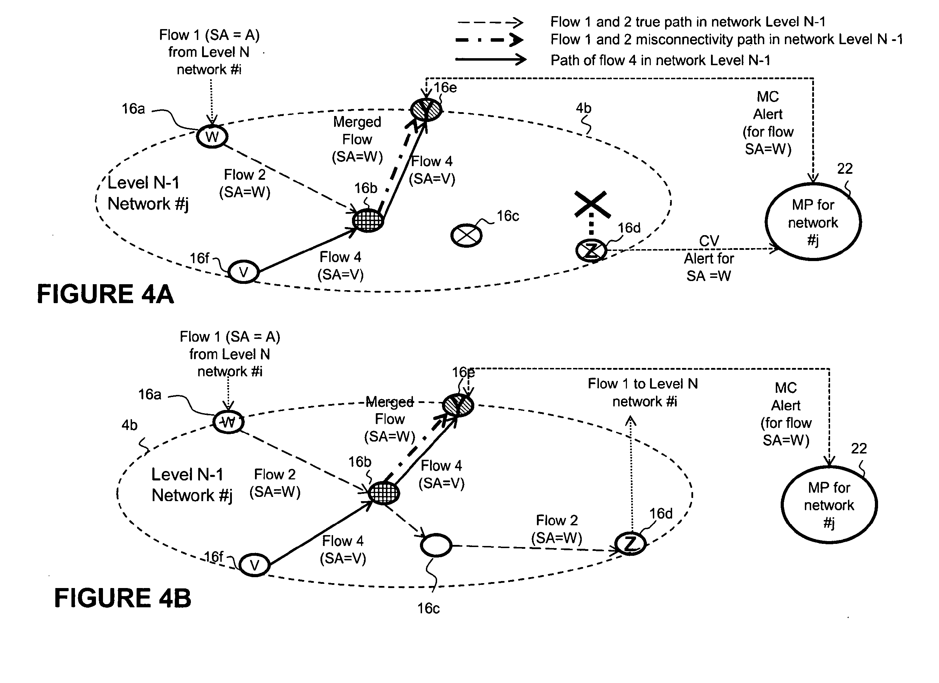

Figures 4A and 4B, which retain the numbering scheme of the earlier figures, show similar misconnectivity scenarios for flow 2 in network #j. As shown in Figure 4A, node 16b misdirects the traffic flow 2 from node 16a with SA = W and mismerges this with another traffic flow, traffic flow 4, which flows from node 16f to node 16e with SA = V. In Figure 4B, node 16b duplicates the traffic flow 2 from node 16a so that a mismerged traffic flow comprising traffic units with connectivity checking OAM messages SA = V and SA = W is received by node 16e. In the former case (Figure 4A) node 16d does not receive flow 2 and detects a break misconnectivity defect due to missing connectivity checking OAM messages with SA = W. In the latter case (Figure 4B) node 16d still receives flow 2 traffic units and connectivity checking messages with SA = W and would not determine any defect is present.

In Figure 4A, the loss of connectivity checking OAM messages by node 16d results in a misconnectivity alert message being generated by node 16d for the traffic flow 2 with SA = W, whereas in Figure 4B, assuming the connectivity checking OAM messages for flow 2 received by node 16d still meet the connection requirements for flow 2, no misconnectivity alert is generated by node 16d. In both Figures 4A and 4B, node 16e can determine a misconnectivity event has occurred between flow 2 and flow 4 by monitoring the connectivity checking OAM messages of the received traffic flow, and by determining that the source address of some of the connectivity checking OAM messages corresponds to a different source address (SA =W) than the expected source address (SA=V). Once node 16e has determined traffic units from SA =W have been misconnected to it appropriate remedial action may be taken.

Not shown in Figures 4A and 4B are any consequential misconnectivity alerts which would be generated by node 14e in client network #i. In the case of Figure 4A, node 14e would raise a break defect alert as it would lose its SA = A connectivity checking OAM message flow. However, in the case of 4B, node 14e would see no defects as its traffic and SA = A connectivity checking OAM message flow would still be arriving as expected and so the operator of network #i would be unaware that a lower layer network has a defect which was causing unintended replication and misdirection of its traffic flow.

Accordingly it is known in the art for misconnectivity to be detected in many situations where there is no potential confusion over the network location of the TUALID of the source address of the misconnected traffic units.

Several Internet Engineering Task Force, (IETF), Requests for Comment (RFCs) consider connectivity checking OAM, such as RFC 5994, RFC5085, RFC 5580 for example where Ethernet or MPLS/Pseudo-Wire server (or transport) networks are used. Such documents all consider various aspects of OAM which indicate that OAM packets should follow a co-path with client traffic data packets to ensure any failures of the data path are reflected in the OAM path. They also often require the connection verification function (i.e., as carried out by the connectivity checking OAM messages) to use the source address of the parent connection. The IETF often specify the use of BFD (Bidirection Forwarding Detection) as the connectivity checking OAM message function. However, a potential flaw of BFD is that it might not use a proper source address but a locally generated 'discriminator' ID which cannot be guaranteed to be unique even within a single layer network.

Misconnectivity detection schemes known in the art are thus capable of detecting certain types of misconnectivity defect in single layer network architectures (i.e. intra-layer misconnectivity) in which different communications protocols are used, for example, where network 2a is an IP layer network and network 4b is an Ethernet or SDH VC4 layer network.

The majority of packet switching layer networks use addressing schemes which assume they are a standalone network, i.e., that exactly the same addressing scheme can be used in different layer network instances of same packet technology X, which leads to inter-layer misconnectivity issues if different layer networks of the same packet switching technology are nested so that, for example, a client/server relationship Xi-over-Xj exists in which both the client layer network Xi and the server layer network Xj use identical addressing schemes for their topology.

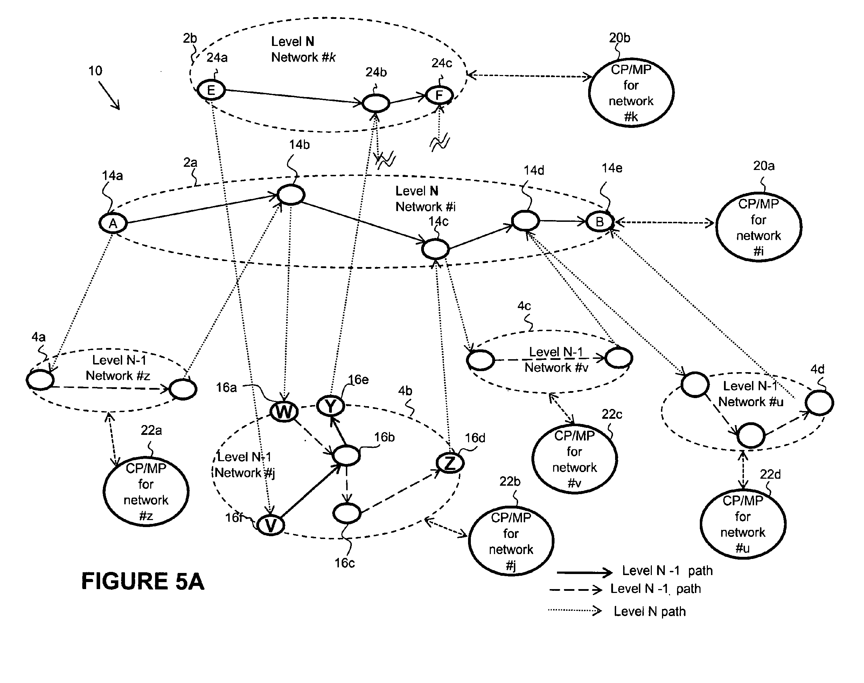

Now consider the more complex situation as shown in Figure 5A, which retains the numbering scheme of the earlier figures for like elements. In Figure 5A, each of the link connections between nodes 14a,b,c,d,e in level N network #i uses edge-to-edge communication paths in level N-1 networks 4a,b,c,d, each having their own control/management plane, 22a,b,c,d respectively. Figure 5A shows in more detail the edge-to-edge communication path between nodes 16a (TUALID = W) and nodes 16d (TUALID = Z) in network #j which supports the link connection between nodes 14b and 14c in client network #i. Also shown in Figure 5A is a communications path between nodes 24a, 24b, and 24c in level N network #k which has management plane 20b, and for which the edge-to-edge server communications path in level N-1 network #j is shown for just one client network #j link connection between nodes 24a and 24b.

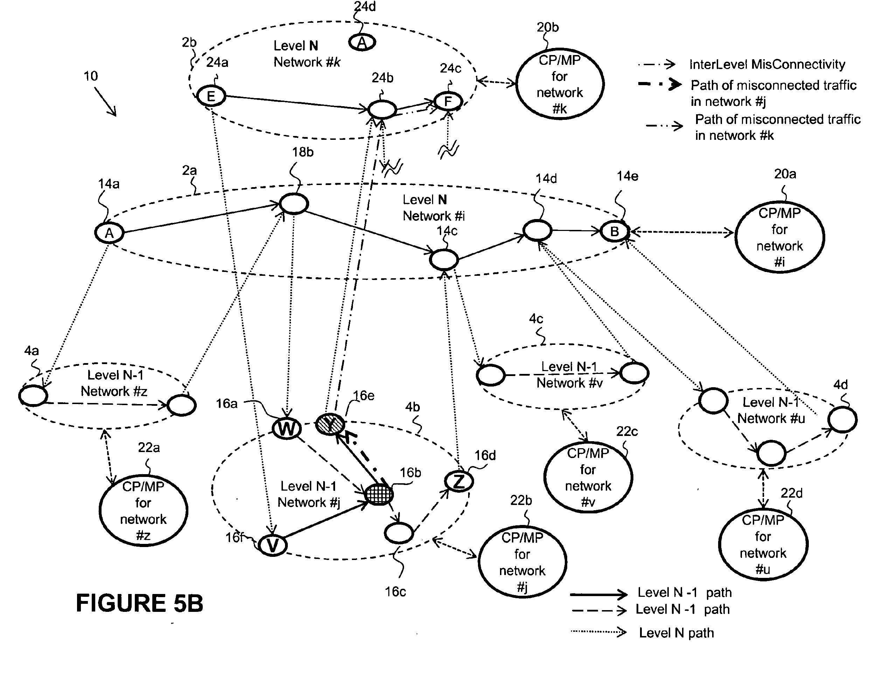

Figure 5B illustrates a limitation of connectivity monitoring schemes known in the art if a certain type of misconnection occurs in the communications system shown in Figure 5A. In Figure 5B, node 16b of the server network #j providing transport functions to the two client networks #i and #k misdirects traffic units from flow 2 (from SA = W towards DA = Z) and mismerges them with the traffic units forming flow 4 (from SA = V towards DA = Y).

If there is no misconnectivity monitoring at node 16e and thus no defect detected and action taken, the traffic from flow 4 SA = V in network #j simply returns to the client network #k. Note that this contains the mismerged client traffic from network #i coming from node 14a with SA = A. As both networks #i and #k have the same network characteristic information, the adaptation function which de-encapsulates the traffic units for network #k will also de-encapsulate the traffic units that came from network #i. Accordingly, the traffic flow received by node 24c in network 2b now contains traffic units with SA = E and SA = A, where the traffic units from SA = A originate from node 14a in network #i, and not from node 24a in network #k. However, although the termination point 24c in network #k may detect the misconnectivity defect (if it sees an unexpected SA = A in any CV OAM packets it receives) 24c still has no way of determining that the traffic units received originate from a traffic flow with SA = A in network #i, i.e. node 24c would assume the packets come from some node 24d in network #k that has SA = A.

The above example illustrates a limitation of prior art addressing and misconnectivity detection schemes in which, even if the node at path termination point 24c determines a misconnectivity defect has occurred, it cannot determine whether the defect is associated with a traffic flow which originates and is contained in its layer network #k or whether the traffic flow originates in some other layer network (i.e. inter-layer misconnectivity defect). A path termination point cannot consistently confirm if an inter-layer misconnectivity defect has occurred using known addressing and misconnectivity detection schemes if nested layer networks of the same technology use the same addressing structure for both traffic forwarding and their misconnectivity detection.

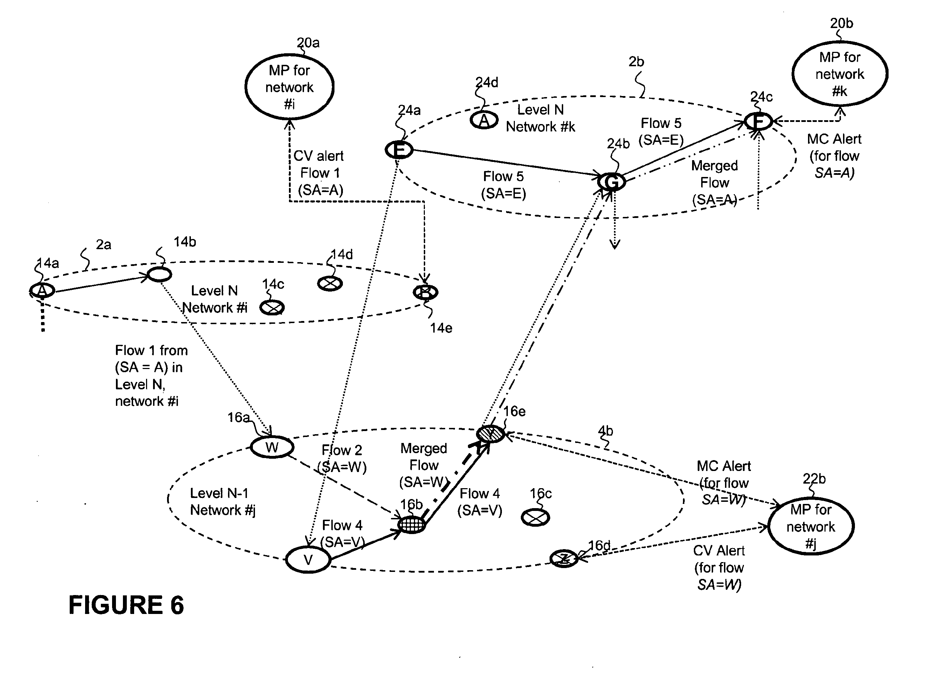

Figure 6 shows in more detail some of the limitations of monitoring the connectivity of traffic flows using conventional addressing schemes for the scenarios shown in Figures 5A and 5B, and retains the numbering scheme of the earlier figures for like elements. As shown in Figure 6, using conventional misconnectivity monitoring schemes, a misconnectivity alert generated by node 24c would indicate that the misconnected traffic units are associated with a source address having TUALID SA = A, which in network #k is the source address for node 24d.

In this scenario, if a re-route say was requested for traffic flowing from node 24d, this could cause network disruption for a genuine traffic flow from node 24d needlessly. Moreover, network operations people could be very confused in trying to diagnose the nature of the true misconnectivity problem. Whilst network operators need to have the capability of verifying correct connectivity for service level agreement (SLA) and billing purposes, an inability to correctly detect misconnectivity defects and then deal with them also poses potentially serious security/integrity issues for an operator in looking after its customer's traffic. It is therefore important to be able to extend the operator's ability to detect instances of misconnectivity from the current intra-layer case to the more general intra-layer and inter-layer network case.

In the scenario shown in Figure 6, a misconnectivity problem could be detectable by node 16d in network #j (i.e. loss of connectivity to node 16a), and also node 14e in network #i (i.e. loss of connectivity to node 14a) due to node 16b diverting the flow from node 16a (which includes the encapsulated and mismerged traffic flow from node 14a in network #i). However, in the event traffic flow 2 is duplicated by node 16b, such as is shown in Figure 5B, where one copy of traffic flow 2 is sent to node 16e and the original traffic flow 2 is sent to node 16d then, assuming the connectivity checking OAM messages received by node 16d still complied with the connectivity verification requirements for flow 2 at node 16d, node 16d in network #j would not generate any misconnectivity alert and nor would node 14e in network #i.

Such problematic inter-layer misconnectivity scenarios can arise whenever nested networks #i and #j have the same network characteristic information, for example, if they both belong to the same communications protocol technology and have similar or identical variable length traffic unit structures (although the fields in the traffic units may not always have identical semantics). Examples of client/server nesting of such communication protocols are MPLSinMPLS, IPinIP, and 802.1ah MACinMAC (Ethernet).

The invention seeks to provide a method of monitoring the connectivity status of traffic flows in layer network architectures which mitigates and/or obviates some of the limitations of prior art misconnectivity detection schemes. In particular, the invention seeks to provide a monitoring process capable of supporting general intra-layer and inter-layer network architectures. The monitoring process seeks to support layer network architectures which may involve several independent operators and/or other parties which obviates and/or mitigates the limitations of known misconnectivity methods/systems. The monitoring process seeks to satisfy the fully backwards compatibility requirement of allowing the independent use of addressing schemes in each different layer network for normal traffic forwarding.

A first aspect of the invention comprises a method of determining the connectivity status of a traffic flow in a communications system comprising a plurality of networks, the method comprising: monitoring the traffic flow at a network location in a first network; determining a unique source address for a connectivity indicating OAM traffic unit in said monitored flow; and, if said source address is associated with misconnectivity of said traffic flow; determining if said source address comprises a topology unique access location identifier (TUALID) having a format which is the same as the format of a topology unique access location identifier for a source address in said first layer network, and if so, analysing the data structure of said source address for said monitored traffic flow to determine from the data structure if the source address of said monitored traffic flow is associated with a topology unique access location identifier for a node located in a different layer network.

The communications system may comprise a hierarchy of networks. In one embodiment, the communications system comprises a plurality of layer networks that are capable of forming client/server relationships with each other to form an ad hoc/arbitrary hierarchy of different levels of nesting.

The plurality of networks may comprise a plurality of layer networks.

The said network location may comprise a sink point of another edge-to edge traffic flow in the first network.

The connectivity indicating traffic unit may comprise a connectivity indicating message. The traffic units containing client payload and traffic units containing connectivity checking OAM messages are as identical as possible. In one embodiment, they are distinguished by using a well-known field value in the common traffic unit header, e.g. a single bit can provide this function with, for example, the value 0 representing client traffic payload and the value 1 representing this layer's OAM messages (of which the connectivity indicating message can be one type of such OAM messages).

The step of processing the structure of the source address may determine if a globally unique party identifier is included in said source address.

The step of processing the structure of the source address may determine if a unique network identifier is included in said source address.

The first network and said different network may be layer networks at the same relative network level.

The first network and said different network may be layer networks at different relative network levels.

Within the different network, traffic units may comprise fields having the same structure and the same or different semantics as traffic units in said first network.

The first and different networks may use the same common communications protocol and the same network mode of communication.

The first and different networks may use the same common communications protocol and different modes of communication.

For example, the first network may comprise a connection-oriented packet-switched network and the other network may comprise another connection-oriented packet-switched network or a connection-less packet-switched network which uses the same characteristic information set as the first network. Alternatively, the first network may have the same communications protocol as the other network, but the first network may comprises a connection-less packet-switched network and the other network may comprise a connection-less packet-switched network or a connection-oriented packet-switched network.

The step of processing the structure of the source address may be performed only if the format of the address conforms to a communications protocol and network mode of communication which is the same as the format of the communications protocol and network mode of communication for network locations in said first network.

A connectivity indicating traffic unit may comprise an operations, administration, and management type of traffic unit.

A connectivity indicating traffic unit may comprise an operations, administration, and management connection verification type of traffic unit which includes a connectivity checking message.

The above method aspect may further comprise: if said source address is associated with misconnectivity of said traffic flow, generating a misconnectivity alert message including said source address; and sending said misconnectivity alert message to a management plane associated with said first network, wherein said management plane processes said misconnectivity alert message to determine said source address of said connectivity indicating traffic unit, and performs said steps of: determining if said source address comprises a topology unique access location identifier having a format which is the same as the format of a topology unique access location identifier for a source address in said first network, and if so, analysing the data structure of said source address for said monitored traffic flow to determine from the data structure if the source address of said monitored traffic flow is associated with a topology unique access location identifier for a node located in a different network.

A second aspect of the invention seeks to provide a communications system comprising: a plurality of communications networks; means to monitor a traffic flow at a network location in a first of said communications networks; means to determine a source address for a connectivity indicating traffic unit in said monitored flow; means arranged to determine if said source address comprises a topology unique access location identifier having a format which is the same as the format of a topology unique access location identifier for a source address in said first network in dependence on said source address being associated with misconnectivity of said traffic flow; and means arranged to analyse the data structure of said source address for said monitored traffic flow in dependence on said source address comprising a topology unique access location identifier having a format which is the same as the format of a topology unique access location identifier for a source address in said first network; and means arranged to determine from the analysed data structure if the source address of said monitored traffic flow is associated with a topology unique access location identifier for a node located in a different one of said plurality of networks.

Another aspect of the invention seeks to provide apparatus arranged to determine the connectivity status of a traffic flow in a communications system comprising a plurality of networks, the apparatus comprising: a traffic monitor arranged to monitor said traffic flow at a network location in a first network; a traffic processor arranged to determine a source address for a connectivity indicating traffic unit in said monitored flow, wherein said traffic processor is further arranged, if it determines a said source address of a connectivity indicating traffic unit is associated with misconnectivity of said traffic flow, to determine if said source address comprises a topology unique access location identifier having a format which is the same as the format of a topology unique access location identifier for a source address in said first network, and if so, to analyse the data structure of said source address for said monitored traffic flow to determine from the data structure if the source address of said monitored traffic flow is associated with a topology unique access location identifier for a node located in a different network.

The network location in the first network referred to in the above aspects which is monitoring said traffic flow may comprise a sink point of another edge-to edge traffic flow in the first network.

Another aspect of the invention seeks to provide a method of configuring a connectivity indicating traffic unit in a communications system comprising a plurality of variable-length packet-switched layer networks to subsequently enable the connectivity status of the traffic flow to be monitored, the method of configuring the connectivity indicating traffic unit comprising: processing said traffic flow at a network location in a network to extract a topology unique access location identifier representing source address for said traffic flow; generating a connectivity indicating traffic unit for said traffic flow, the connectivity indicating traffic unit comprising a source address data structure, wherein said source address data structure comprises: a portion comprising said topology unique access location identifier; and a portion identifying said traffic unit as originating in said layer network.

The portion identifying said traffic unit as originating in said layer network may comprise a globally unique party identifier for a party managing said other network.

The portion identifying said traffic unit as originating in said layer network may comprise a layer unique identifier for said other network.

The connectivity indicating traffic unit may be subsequently used to indicate the connectivity status of said traffic flow in the first method aspect of the invention.

Embodiments of the invention propose an addressing scheme for use in communications systems comprising multiple layer networks which do not require per layer network uniqueness in the data plane with respect to the forwarding of normal traffic units. Although one solution to the inter-layer misconnectivity problems that nested packet-switching network architectures introduce is to ensure network addressing uniqueness in the data plane topology itself for all layer network instances, this places unrealistic (and non backwards compatible) restrictions for addressing in private networks which may then form client/server relationships with other private networks.

A conventional addressing scheme defined for use in a layer network is augmented by some embodiments of the invention so that address data structure is modified to have a particular format (although in principle the invention could be used in new addressing schemes for new communications protocols right from the start). This enables the augmented source address data structure to be used for determining the nature of the misconnectivity event which has occurred. In some embodiments, the augmented addressing scheme is used for data plane traffic and for connectivity indicating traffic units comprising OAM connectivity indicating messages. Other embodiments of the invention do not require that the data plane traffic units carrying client traffic contain the same source address as the data plane traffic units comprising connectivity indicating OAM messages which follow the same path. In this case the data plane traffic units can retain the unmodified source address data structure (if they contain this information anyway). In other embodiments, the augmented SA data structure is used even if the data plane traffic units carrying client information conform to a connection-oriented packet-switching technology based on label-swapping in which case the client carrying traffic units do not contain a SA in their headers at all. One embodiment of the invention creates an adjunct OAM connection verification (CV) flow between pairs of access points which are to be monitored for correct connectivity and a unique addressing structure is run only in the CV OAM flow.

The aspects of the invention are as set out herein above and in the accompanying independent claims and the embodiments of the invention are as set out herein above and in the recited features of the dependent claims and may be combined in any suitable manner apparent to those of ordinary skill in the art.

The preferred embodiments of the invention will now be described with reference to the accompanying drawings which are by way of example only and in which:
Figure 1 shows schematically an exemplary multi-network level communications system 10 in which a method of monitoring misconnectivity can be implemented according to an embodiment of the invention;
Figure 2 shows two exemplary layer networks in the communications system 10 of Figure 1;
Figure 3A shows the path taken by an exemplary traffic flow across the communications system of Figure 2 in which a misdirection type of intra-layer misconnectivity defect has occurred in level N;
Figure 3B shows the plurality of paths taken by an exemplary traffic flow across the communications system of Figure 2 in which another type of unintended replication and mismerging intra-layer misconnectivity defect has occurred in level N;
Figure 4A shows the path taken by an exemplary traffic flow across the communications system of Figure 2 in which a misdirection type of intra-layer misconnectivity defect has occurred in level N-1;
Figure 4B shows the plurality of paths taken by an exemplary traffic flow across the communications system of Figure 2 in which another type of unintended replication and mismerging intra-layer misconnectivity defect has occurred in level N-1;
Figure 5A shows exemplary traffic flows in a communications system 10 comprising two level N networks #i, #k which use the same server transport network #j in level N-1;
Figure 5B shows an exemplary unintended replication and mismerging misconnectivity event in the communications system of Figure 5A which gives rise to both intra-layer and inter-layer misconnectivity;
Figure 6 shows the misconnectivity alerts generated for the exemplary misconnectivity event shown in Figure 5B when a conventional addressing scheme is used;
Figure 7 shows an OAM packet header source address field structure for implementing a misconnectivity detection system according to an embodiment of the invention;
Figure 8 shows the misconnectivity alerts generated for the exemplary misconnectivity event shown in Figure 6 when an addressing scheme according to an embodiment of the invention is used; and
Figure 9 shows steps in a method of monitoring the connectivity status of a traffic flow according to an embodiment of the invention.

The best mode of the invention as currently contemplated by the inventors will now be described with reference to the accompanying drawings. For the sake of brevity and clarity, features of the invention well-known to those of ordinary skill in the art may be omitted from the detailed description or represented by a single exemplary type capable of providing the appropriate level of functionality.

The embodiments of the invention seek to monitor misconnectivity of a traffic flow by detecting whether the traffic flow arriving at some node was intended to arrive at that node, and if not whether the misconnected traffic source comes from within the same layer network (i.e. intra-layer misconnectivity) or some other layer network that has a client or server relationship to this layer network (i.e. inter-layer misconnectvity). Embodiments of the invention seek to be able to apply to all types of connection-oriented and connectionless packet-switching technologies that are based on variable size traffic units and that can form same mode/technology client/server relationships.

The term "misconnectivity event" is defined herein to comprise misconnectivity defects of the type defined in the OAM standards for specific technologies, e.g. I.610 for ATM, Y.1731 for Ethernet, etc., or any other of action performed by a node which results in data plane traffic units ceasing to follow their expected path.

The term 'connectivity indicating traffic unit' includes traffic units which comprise a 'connectivity indicating OAM message' either by carrying meta-data in their payload and/or which are identified as such through header information. A "traffic unit" can comprise a packet, frame, or any other type of protocol data unit (PDU), etc. although references to a packet which are consistent with the terminology used in one communications protocol may be considered as references for the equivalent data structure in other communications protocols where apparent (for example, packet-switched network). The term connectivity indicating traffic unit can thus refer to any suitable type of traffic unit, including OAM connectivity checking messages, such as, for example, OAM CV or BFD packets. The term OAM CV packet is used herein below as a synecdoche for all types of connectivity indicating traffic units unless the context explicitly dictates otherwise.

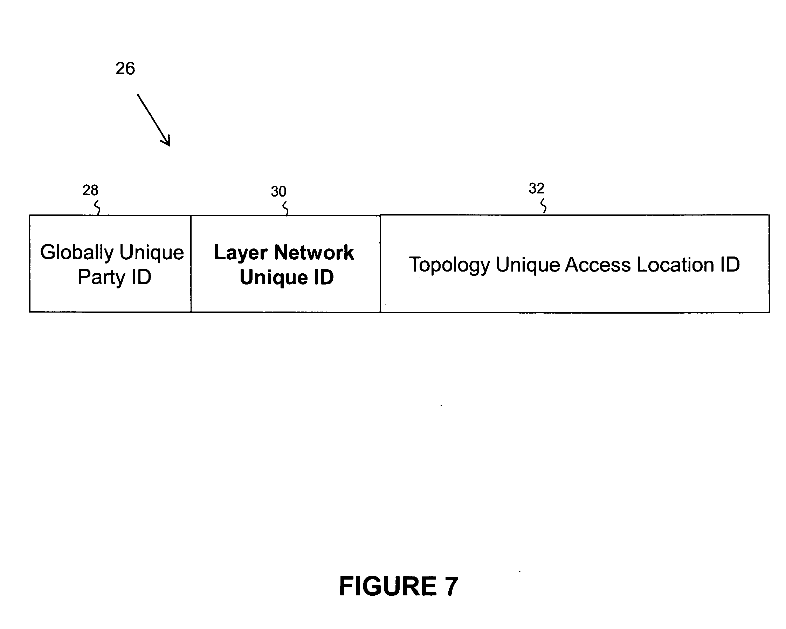

Figure 7 of the accompanying drawings shows an embodiment of an address data structure 26 which can populate the header of a traffic unit comprising a connectivity indicating OAM message (and also, in another embodiment of the invention, which can be used by any data-plane traffic units, including those carrying client traffic).

As shown in Figure 7, the address data structure 26 is partitioned into a globally unique party identifier (GUPID) portion 28, a layer unique network identifier (LUNID) portion 30 which uniquely identifies a network to each globally unique party, and a network topology unique access location identifier (TUALID) portion 32. The TUALID can have the same structure and semantics as the normal source address (SA) which is determined by the characteristic information set for the network within which the source node resides. Examples of TUALID SA types include E.164, IPv4, IPv6, IEEE MAC.

Figure 8 of the accompanying drawings retains the numbering scheme of the previous figures for like elements, and shows schematically how the use of an addressing scheme according to the invention in which connectivity status indication traffic units have an address structure as shown in Figure 7 resolves the issue of incorrectly attributing the source of the misconnected traffic units (SA = A) by node 24c in network #k to a flow originating from node 24d in network #k.

In Figure 8 source node 14a is associated now with a GUPID and LUNID as well as a TUALID shown in the figures as SA = A_{P1#i} where the A represents the original network topology address, P1 indicates the GUPID for party 1 (the operator controlling network #i), and #i represents the level unique network identifier LUNID. As shown in Figure 8, a similar addressing scheme is used in network #j for all traffic units, meaning that the data plane connectivity verification traffic units for flow 2 have a modified SA = W_{P2#j}, indicating the GUPID of a different party 2, and the LUNID of network #j.

In embodiments of the invention in which only OAM connectivity indicating traffic units use the augmented SA data structure shown in Figure 7, the data plane traffic units of both networks #i and #j are not provided with any augmented SA data structure. In some embodiments, this means that the data plane traffic units which carry client traffic from network #i over network #j retain their original source address structure for normal traffic forwarding and in other embodiments, for example where network #j uses a connection-oriented packet-switching communications technology based on label-swapping, only the OAM connectivity status indication traffic units have a source address modified to have the augmented data structure shown in Figure 7.

As shown in Figure 8, therefore, node 24c will determine from the monitored connectivity status indication traffic units that the source address has a data structure according to the addressing scheme shown in Figure 7. This enables node 24c to check if the GUPID matches its own network's GUPID, and if so, to determine if the LUNID matches the LUNID of its own network. If so, the node 24c has confirmation that the flow originated in the same network as the network it resides in. If, however, the GUPID does not match, then node 24c knows immediately that there is a misconnectivity defect in a network owned by a different network operator and appropriate actions can be taken (for example, to alert the other network operator and/or to discard some or all of the misconnected traffic units received). If the GUPID does match the GUPID for the monitoring node's network, the monitoring node can determine if the LNUID matches the LNUID for network in which the monitoring node resides. If it does not, then the misconnected traffic has a source outside that specific network but in another layer network belonging to the same party, and suitable action can be taken (for example, to discard some or all of the traffic units and/or to alert the operations staff to investigate). If a monitoring node 24c determines a misconnectivity event has occurred, it may also generate a misconnectivity alert which is forwarded to the management plane 20b of network #k, so that the management plane 20b can take appropriate action.

Each network is to independently augment its conventional source address data structure in its connectivity status indication traffic units. Accordingly, not all layer networks that form client/server relationships in a communications system need to implement an augmented addressing scheme though this will affect their ability to detect/diagnose some cases of inter-layer misconnectivity. Accordingly, it is not a requirement of a network within which a method of monitoring the connectivity status of a traffic flow according to an embodiment of the invention is implemented to also implement a method of configuring a connectivity indicating traffic unit using an addressing scheme according to an embodiment of the invention, although in practice is it likely that both methods would be implemented in most networks as the invention would have more limited utility otherwise.

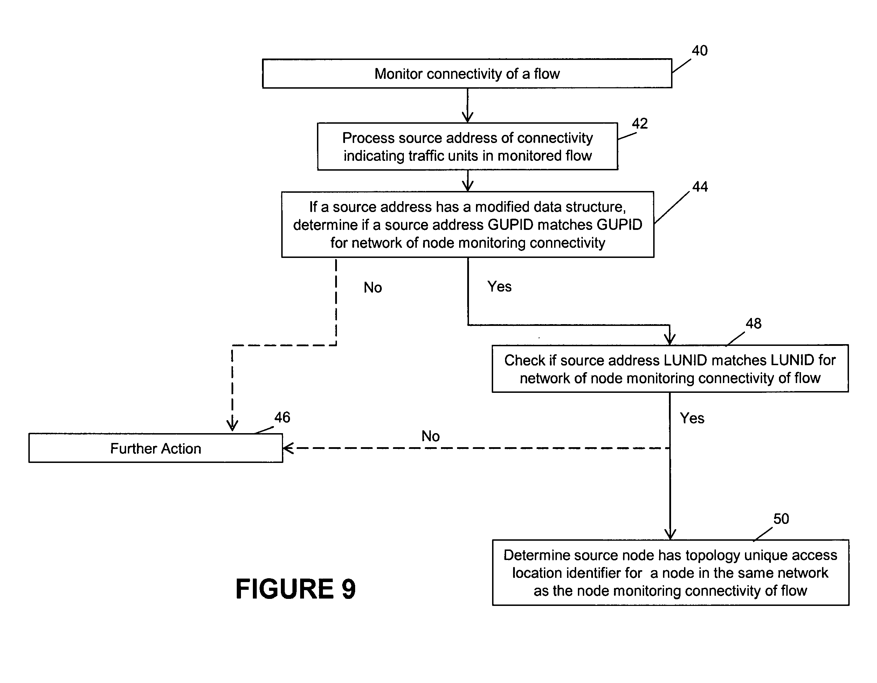

Figure 9 shows steps in a method of monitoring the connectivity status of a traffic flow according to an embodiment of the invention. In Figure 9, a node at a first network location in a first network 2b monitors a received traffic flow (step 40) and processes the source address of all received connectivity status indication traffic units, such as OAM CV packets in the monitored flow (step 42). If a source address is determined to have a modified data structure, the GUPID field is analysed to determine if this matches the GUPID of the first network. If the two GUPIDs do not match, the traffic unit is determined to belong to a traffic flow which has come from another party's network 2a. At this point node 24c may optionally take further action (step 46): for example, to selectively discard traffic units from the misdirected traffic flow and/or discard all traffic units it receives and/or generate a misconnectivity alert which is sent to its management plane 20b and/or inform the operator of the other network 2a involved. If the GUPIDs do match, then the other network #i shares the same operator as the network #k in which monitoring node 24c is located, and node 24c then analyses the LUNID field of the connectivity status messages address structure to determine whether the identity of the network within which the misconnected flow originates is the same as the network in which node 24c is located (step 48).

If the two LUNIDs do not match, the monitoring node 24c and the source node 14a for the monitored traffic flow are not located in the same network (though both networks belong to the same operating party). Further action (step 46) may again be taken, for example, the management plane 20a of the other network #i may be notified with details of the misconnectivity event associated with flow 1 from a node 14a in that network domain as a result of receiving an alert sent by the management plane of the monitoring node's network. Optionally, the network operations staff can also be alerted with all the known information to help them investigate further to try and locate the underlying reason for the misconnectivity defect.

If, however, the LUNID field of the modified address structure does match the LUNID of the network of communications termination point 24c, then the source of the misconnectivity would be determined to be located in the same network (step 50) (i.e., both source and sink nodes would be in network #k), which means that the network TUALID in the address structure would uniquely and correctly resolve to the correct source node for the misconnected traffic flow in network #k. Such a scenario would resolve, as Figure 9 shows for illustrative purposes, in the traffic flow with SA = A_{P3#k} is associated with node 24d in network #k if the LUNID (#k), and GUPID (P3) fields of the augmented address structure of the monitored flow matched those of node 24c (GUPID = P3, LUNID = #k)

Those of ordinary skill in the art will appreciate that the above embodiments can be implemented in an equivalent manner for any type of OAM connectivity checking traffic unit belonging to a packet-switching technology in which variable length server traffic units are capable of encapsulating client traffic units having an identical addressing structure from a different network domain in order to distinguish between the network domains.

It is also possible to utilise a special addressing field structure in which a globally unique party identifier is not utilised in the OAM connection source address field, instead only a globally unique "network" identifier is used to uniquely identify each layer network. However, in practice, using a GUPID provides a more scalable solution. Using a layer unique network identifier without a globally unique party identifier is likely to be useful only if a single party owns all the layer networks that can take part in a client/server relationship using the same packet-switching mode/technology.

Exemplary addressing structures which are capable of being adapted for use in a special addressing scheme by the invention include any suitable service label addressing scheme such as that provided by a Network Service Access Point (NSAP) address as defined by ISO/IEC 8348, or the Institute of Electrical and Electronics Engineers (IEEE)'s Organisationally Unique Identifier (also known as a Company Identifier) or the IETF IPv4 or IPv6 addressing structures together with AS (Autonomous System) numbers. Those of ordinary skill in the art will be aware that whilst it is theoretically possible to construct any arbitrary addressing scheme using one based on agreed standards, at least for the GPUID part, is important in the case that different operating parties enter into client/server networking arrangements.

A NSAP address comprises a 20 octet data structure that provides a 'placeholder' for addresses. Three main formats exist inside a common shell structure of: AFI (2 decimal digits - 1 octet) + IDI (variable) + DSP (variable), where the AFI (Authority Format ID) and IDI (Initial Domain ID) fields indicate the structure of the address that follows in the DSP (Domain Specific Part). A NSAP address may be based on public/global E.164 addressing (only if AFI 45 or 59, and then IDI forms part of address), some country's address authority (if AFI = 39 hex, and then DCC (Data Country Code) is used in IDI) or some organisation's address structure (if AFI=47 hex, and then the ICD (International Code Designator) is used in the IDI).

The ICD case effectively hands addressing control to an organisation which enable global party unique identifiers and network level identifiers to be used in the addressing structure by individual organisation. For example, each network operator will have a unique ICD code and the DSP topological addresses that follow in ICD NSAPs have 17 octets for their use.

In one embodiment of the invention an NSAP address is used as a special source address for OAM messages (and optionally also other types of traffic units) in which a Globally Unique Party ID (GUPID) field 28 address is formed from the ICD code for each level network's network operator and a 1 octet quantity is added to the ICD code for a 'Layer Unique Network ID' address for the network layer unique identifier subfield 30. This could enable up to 256 code points in theory to be available to identifier network layers by one operating party if one uses a binary representation of a decimal.

The TUALID address in field 32 shown in Figure 7 could, in principle, be any source address, not necessarily that of the relevant communications protocol used by the layer network, for example, IPv4, IPv6, MAC, E.164. In one embodiment, the TUALID portion 32 of the source address field holds an address having a format which is the same as that used for identifying the access points in the network the addressing scheme is being applied to. For example, an MPLS OAM traffic unit uses IPv4 or IPv6 as a unique topology address whilst an Ethernet/PBB-TE traffic unit uses a unique MAC topology address. Alternatively, as the first three octets of every Ethernet MAC address is an OUI (Organisationally Unique ID) that is administered by the IEEE, and the three octet OUI can therefore be used as a GUPID with the topology address structure taking a form as outlined above for the NSAP case.

A misconnectivity detection system which uses the special addressing structure to replace the original SA of OAM packets at each network level access point can be used in a communication system 10 comprising a plurality of connection-oriented packet-switched (co-ps) communications mode layer networks, for a plurality of connectionless packet switched (cl-ps) communications mode layer networks, or a mixture of co-ps and cl-ps communication mode networks depending on the communications protocol used the layer networks in the respective embodiment of the invention.

Misconnectivity is capable of being resolved to a unique network even if the organisational identifiers (the Globally Unique Party ID (GUPID) 28 fields) are the same, as the network layer ID still uniquely identifies the access points of all traffic sources. In embodiments where different GUPIDs are associated with different layer networks, and misconnectivity between the layer networks occurs, it is possible to determine that a monitored traffic flow originates in a different network from the network in which the node monitoring the flow is located without even checking the LUNID field of the SA as the GUPID alone is sufficient to identify if the SA was assigned in another network and thus to determine if the monitored traffic flow has been involved in a type of inter-layer network misconnectivity.

The above embodiments assume that proper client/server relationships exist between different layer networks and that the Data Plane (DP), Control Plane (CP), Management Plane (MP) components of one layer network are quite different instances of the same DP/CP/MP components of another layer network (at any relative network level) even though the component types used may be identical in that they share the same traffic unit structures, same addressing structures for access points, the same signalling protocol, etc.

This obviously has to be true when different parties own levels N, N-1, N-2 etc but it is also true when the same party owns levels N, N-1, N-2, etc and a "true" client/server relationship exists. It is also possible for different parties to own different networks within the same level.

As transport networks move from their traditional connection-oriented circuit-switching (co-cs) mode base (e.g. PDH, SDH) to a co-ps base (especially MPLS-TP and Ethernet/PBB-TE) then there will be a need to provide the transparent carriage of the co-ps layer network belonging to party X over the co-ps layer network belonging to party Y. The embodiments of the invention seek to provide solutions to the problem of inter-layer misconnectivity as well as intra-layer misconnectivity as embodiments of the invention structure the SAs used in each network's OAM connectivity status indication traffic units to be globally unique. The SA addressing structure of the native characteristic information for a network is modified to partition the data structure representing the address into sections or sub-fields comprising means to uniquely identifier a management or control entity for a network, such as the Globally Unique Party ID (GUPID) field referred to herein above, means to uniquely identifier a specific network, such as the Layer Unique Network Identifier (LUNID) referred to herein above and finally, a field for a conventional address indicator such as the Topology Unique Access Location ID (TUALID) referred to herein.

Those of ordinary skill in the art will appreciate that Figure 7 shows just one embodiment of a special address data structure in accordance with an embodiment of the invention. In other embodiments, the specific order of the sub-fields in the address data structure may be different. In other embodiments, that additional information may also be captured in the address data structure providing that the permitted total length of the source address field is not exceeded. Accordingly, whilst for any given network implementing an addressing scheme in accordance with the embodiments of invention, an augmented addressing structure comprises generally a GUPID, LUNID and TUALID triplet, where the GUPID represents a distinct party such as the network operator or management domain within which the network resides, the LUNID represents a means of identifying a specific network within each management domain, and the TUALID retains the structure and semantics specified in the characteristic information set for that network, an augmented data structure need not always comprise these specific fields in the given order and in other embodiments additional information may be captured in the modified address data structure.

Accordingly, an addressing scheme is proposed in accordance with the general embodiment of the invention which enables the connectivity status of a traffic flow in a communications system comprising a plurality of layer networks to be monitored. Misconnectivity is determined by monitoring the traffic flow at a network location in a first layer network such as, for example, the sink point of an edge-to edge traffic flow in the first layer network. A unique source address for a received connectivity indicating traffic unit in said monitored flow is determined and if said source address is associated with misconnectivity of said traffic flow, it is then determined if said source address comprises a topology unique access location identifier having a format which is the same as the format of a topology unique access location identifier for a source address in said first network. Where the formats are the same, the data structure of the source address for said monitored traffic flow is analysed in more detail to determine from the data structure subfields if the source address of said monitored traffic flow is associated with a topology unique access location identifier for a node located in a different layer network. Where it is associated with a different layer network, suitable further action, such as alerting the network operator for the other network, can be taken.

If sublayering is employed within a layer network to allow for the construction of arbitrary hierarchies (where levels do not apply) within that layer network, then it is sufficient for the purposes of detecting misconnectivity that the equivalent of access points in each sublayer be globally unique in their identity within the context of the layer network that contains the sublayers. Provided that this is implemented it is possible to manage misconnectivity within a layer network with arbitrary sublayer hierarchy. This approach can be used in conjunction with nested layer networks that have defined client/server relationships. In the case of sublayering the "level" information has no context. In other words the concept of a "level" is useful between layer networks in a hierarchy, but has no context in relation to sublayers.

Persons of ordinary skill in the art will be aware of possible modifications and alternatives to some of the specific elements described in the above embodiments. The scope of the invention however is to be defined by the accompanying claims when read in the context of the above description of the invention taking into account such possible modifications and alternatives.

## Claims

1. A method of determining the connectivity status of a traffic flow in a communications system comprising a plurality of networks, the method comprising:
monitoring the traffic flow at a network location in a first network;
determining a unique source address for a connectivity indicating traffic unit in said monitored flow;
wherein,
if said source address is determined to be associated with misconnectivity of said traffic flow,
determining if said source address comprises a topology unique access location identifier having a format which is the same as the format of a topology unique access location identifier for a source address in said first network, and
if so,
analysing the data structure of said source address for said monitored traffic flow to determine from the data structure if the source address of said monitored traffic flow is associated with a topology unique access location identifier for a node located in a different network.

2. A method as claimed in claim 1, wherein the step of processing the structure of the source address determines if a globally unique party identifier is included in said source address.

3. A method as claimed in claim 1 or 2, wherein the step of processing the structure of the source address determines if a unique network identifier is included in said source address.

4. A method as claimed in any previous claim, wherein the first network and said different network are layer networks at the same relative network level.

5. A method as claimed in any one of previous claims 1 to 4, wherein the first network and said different network are layer networks at different relative network levels.

6. A method as claimed in claim 1, wherein within the different networks, traffic units comprise fields having the same structure and the same or different semantics as traffic units in said first network.

7. A method as claimed in claim 6, wherein the first and different networks use the same common communications protocol and the same network mode of communication.

8. A method as claimed in claim 6, wherein the first and different networks use the same common communications protocol and different modes of communication.

9. A method as claimed in any previous claim, wherein the step of processing the structure of the source address is performed only if the format of the address conforms to a communications protocol and network mode of communication which is the same as the format of the communications protocol and network mode of communication for network locations in said first network.

10. A method as claimed in any previous claim, wherein a connectivity indicating traffic unit comprises an operations, administration, and management type of traffic unit.

11. A method as claimed in any previous claim, wherein a connectivity indicating traffic unit an operations, administration, and management connection verification type of traffic unit which includes a connectivity checking message.

12. A method as claimed in any previous claim, wherein said method further comprises:
if said source address is associated with misconnectivity of said traffic flow, generating a misconnectivity alert message including said source address; and
sending said misconnectivity alert message to a management plane associated with said first network, wherein said management plane processes said misconnectivity alert message to determine said source address of said connectivity indicating traffic unit, and performs said steps of:
determining if said source address comprises a topology unique access location identifier having a format which is the same as the format of a topology unique access location identifier for a source address in said first network, and
if so,
analysing the data structure of said source address for said monitored traffic flow to determine from the data structure if the source address of said monitored traffic flow is associated with a topology unique access location identifier for a node located in a different network.

13. A communications system comprising:
a plurality of communications networks;
means to monitor a traffic flow at a network location in a first of said communications networks;
means to determine a source address for a connectivity indicating traffic unit in said monitored flow;
means arranged to determine if said source address comprises a topology unique access location identifier having a format which is the same as the format of a topology unique access location identifier for a source address in said first network in dependence on said source address being associated with misconnectivity of said traffic flow;
means arranged to analyse the data structure of said source address for said monitored traffic flow in dependence on said source address comprising a topology unique access location identifier having a format which is the same as the format of a topology unique access location identifier for a source address in said first network; and
means arranged to determine from the analysed data structure if the source address of said monitored traffic flow is associated with a topology unique access location identifier for a node located in a different one of said plurality of networks.

14. Apparatus arranged to determine the connectivity status of a traffic flow in a communications system comprising a plurality of networks, the apparatus comprising:
a traffic monitor arranged to monitor said traffic flow at a network location in a first network;
a traffic processor arranged to determine a source address for a connectivity indicating traffic unit in said monitored flow, wherein said traffic processor is further arranged, if it determines a said source address of a connectivity indicating traffic unit is associated with misconnectivity of said traffic flow, to determine if said source address comprises a topology unique access location identifier having a format which is the same as the format of a topology unique access location identifier for a source address in said first network, and if so, to analyse the data structure of said source address for said monitored traffic flow to determine from the data structure if the source address of said monitored traffic flow is associated with a topology unique access location identifier for a node located in a different network.

15. A method of configuring a connectivity indicating traffic unit to subsequently enable the connectivity status of the traffic flow to be monitored according to the method as claimed in any one of claims 1 to 12, the method of configuring the connectivity indicating traffic unit comprising:
processing said traffic flow at a network location in said other network to extract a topology unique access location identifier representing source address for said traffic flow;
generating a connectivity indicating traffic unit for said traffic flow, the connectivity indicating traffic unit comprising a source address data structure,
wherein said source address data structure comprises:
a portion comprising said topology unique access location identifier; and
a portion identifying said traffic unit as originating in said other network.
